# EUROPÄISCHE PATENTSCHRIFT

(11) **EP 1 208 960 B1**
(45) Veröffentlichungstag und Bekanntmachung des Hinweises auf die Patenterteilung: **03.05.2006**
(21) Anmeldenummer: 01122440.9
(22) Anmeldetag: 20.09.2001
(51) Int. Cl.: B29C 67/00, B29C 59/00, B29C 44/56, A63H 33/04, B29K 105/04

(54) **Formgebungswerkzeug zum Rundformen eines aus einem festen Schaum bestehenden, plastisch verformbaren Spielbausteins**
Tool for rounding a plastically deformable toy building block of rigid foam
Outil pour arrondir un bloc de jeu de construction en mousse rigide et plastiquement déformable

(30) Priorität: 20.11.2000 DE 20019715 U
(43) Veröffentlichungstag der Anmeldung: 29.05.2002
(73) Patentinhaber: fischertechnik GmbH, 72178 Waldachtal (DE)
(72) Erfinder: Fischer, Artur,Senator E.h.Prof.Dr.phil.h.c.Dr.Ing, 72178 Waldachtal (DE)

(56) Entgegenhaltungen:
- GB-A- 855 739
- GB-A- 2 141 372
- US-A- 2 957 205
- US-A- 4 613 474
- US-A- 5 674 547
- PATENT ABSTRACTS OF JAPAN vol. 009, no. 235 (M-415), 21. September 1985 (1985-09-21) & JP 60 089332 A (MATSUSHITA DENKI SANGYO KK), 20. Mai 1985 (1985-05-20)

## Beschreibung

Die Erfindung betrifft ein Formgebungswerkzeug zum Rundformen eines aus einem festen Schaum bestehenden, plastisch verformbaren Spielbausteins gemäß dem Oberbegriff des Anspruchs 1.

Ein aus einem festen Schaum bestehender, plastisch verformbarer Spielbaustein ist bekannt aus der DE 197 03 038. Der bekannte Spielbaustein besteht aus einem Stärkematerial, er weist Stärke oder ein stärkehaltiges Material auf. Das Stärkematerial wird in einem Extruder aufgeschmolzen, es expandiert beim Austritt aus dem Extruder zu einem Schaum, der abkühlt und erstarrt. Ein Herstellungsverfahren für den aus einem festen Schaum bestehenden, plastisch verformbaren Spielbaustein ist offenbart in der DE 40 16 597 A1. Der bekannte Spielbaustein hat beispielsweise eine Zylinderform mit allerdings schlechter Form- und Oberflächengenauigkeit. Die Oberfläche des bekannten Spielbausteins weist gegenüber einer zylindrischen Fläche Ausbauchungen und Einbeulungen auf. Gegenüber einer Zylinderform weicht der bekannte Spielbaustein durch eine Krümmung in Längsrichtung ab.

Aus der DE 200 09 182 ist eine Reibe vorbekannt, die zum Zerkleinern der vorstehend erläuterten, geschäumten Spielbausteine zu einem schüttfähigen Reibgut, beispielsweise zu Flocken, vorgesehen ist. Diese Reibe weist ein kastenförmiges Grundteil auf, in dem eine sog. Kratze einliegt. Die Kratze ist ein Flachriemen, aus dessen einer Seite kurze Drahtstifte vorstehen.

Der Erfindung liegt die Aufgabe zugrunde, ein Formgebungswerkzeug vorzuschlagen, das gemeinsam mit der vorstehend erläuterten Reibe zum Rundformen eines Spielbausteins der eingangs erläuterten Art verwendbar ist, mit dem sich die Formgenauigkeit des Spielbausteins verbessern lässt.

Diese Aufgabe wird erfindungsgemäß durch die Merkmale des Anspruchs 1 gelöst. Das erfindungsgemäße Formgebungswerkzeug mit den Merkmalen des Anspruchs 1 weist eine raue Wälzfläche auf. Die Rauheit der Wälzfläche bewirkt, dass der Spielbaustein auf der Wälzfläche abrollt, wenn das Formgebungswerkzeug mit seiner rauen Wälzfläche quer zu einer gedachten Achse des Spielbausteins über diesen hinwegbewegt wird. Der Spielbaustein hat keinen Schlupf auf der Wälzfläche. Auf einer glatten Oberfläche hat der bekannte Spielbaustein aufgrund seiner von der Zylinderform abweichenden Form die Tendenz zu rutschen anstatt abzurollen. Von der Wälzfläche des erfindungsgemäßen Formgebungswerkzeugs steht ein Führungs- und Abstandshalteelement ab.

Zum Rundformen wird der Spielbaustein auf die Kratze der Reibe aufgelegt und das erfindungsgemäße Formgebungswerkzeug wird aufgesetzt. Durch Hin- und Herschieben des Formgebungswerkzeugs rollt der Spielbaustein auf der Kratze der Reibe und der Wälzfläche des erfindungsgemäßen Formgebungswerkzeugs ab. Das Führungs- und Abstandshalteelement führt das Formgebungswerkzeug beim Verschieben an einer Längsseitenwand des Grundkörpers der Reibe und hält die Wälzfläche des Formgebungswerkzeugs in einem vorgegebenen Abstand von der Kratze. Durch das Abrollen des Spielbausteins zwischen der Reibe und der Wälzfläche des erfindungsgemäßen Formgebungswerkzeugs wird der Spielbaustein rund geformt in dem Sinne, dass sich seine Form und Oberfläche einer gedachten, geometrischen Zylinderform annähert. Die Formgenauigkeit des Spielbausteins wird verbessert. Weiterer Vorteil des erfindungsgemäßen Formgebungswerkzeugs ist, dass aufgrund seines Führungs- und Abstandshalteelements der Spielbaustein reproduzierbar auf einen vorgegebenen Durchmesser gerollt wird. Dadurch lässt sich eine beliebige Anzahl an Spielbausteinen auf einen gleichen Durchmesser rollen, wobei eine Durchmessertoleranz (Durchmesserabweichung) vorhanden ist.

In bevorzugter Ausgestaltung der Erfindung ist das Führungs- und Abstandshalteelement als in Längsrichtung verlaufender, von der Wälzfläche abstehender Steg ausgebildet.

Vorzugsweise sind auf beiden Längsseiten der Wälzfläche je ein Führungs- und Abstandshalteelement angeordnet, die beim Aufsetzen des erfindungsgemäßen Formgebungswerkzeugs auf die bekannte Reibe zwischen deren Längsseitenwände eingreifen und das Formgebungswerkzeug dadurch in Längsrichtung verschiebbar an der Reibe führen. Die beiden Führungs- und Abstandshalteelemente halten die Wälzfläche des erfindungsgemäßen Formgebungswerkzeugs an beiden Längsseiten in gleichem Abstand von der Reibe und vermeiden ein Schrägstellen des Formgebungswerkzeugs. Dadurch wird erreicht, dass der Spielbaustein beim Abwälzen zwischen der Reibe und dem Formgebungswerkzeug über seine gesamte Länge denselben Durchmesser erhält und der Spielbaustein nicht zu einem Kegel gerollt wird.

Bei einer Weiterbildung der Erfindung ist vorgesehen, das Formgebungswerkzeug mit einer Wälzplatte auszubilden, die auf beiden Seiten eine raue Wälzfläche aufweist. Von beiden Wälzflächen stehen Führungs- und Abstandshalteelemente ab, die allerdings unterschiedliche Höhe aufweisen und dadurch die beiden Wälzflächen in unterschiedlichem Abstand von der Reibe halten. Es kann dadurch wahlweise eine der beiden Wälzflächen zum Rundformen des Spielbausteins verwendet werden, wobei die unterschiedlich hohen Führungs- und Abstandshaltelemente unterschiedliche Durchmesser des Spielbausteins bewirken. Durch ein niedriges Führungs- und Abstandshalteelement auf einer Seite der Wälzplatte wird beim Abrollen der Spielbaustein im Innern gerissen und es entsteht ein schlauchförmiger Hohlkörper. Der Hohlkörper lässt sich in Längsrichtung aufschneiden und man erhält eine Art Lappen, der aus dem festen Schaum besteht und sich beispielsweise zur Oberflächengestaltung von Modelllandschaften eignet.

In bevorzugter Ausgestaltung der Erfindung weist die Wälzfläche des Formgebungswerkzeugs eine Rändelung, insbesondere eine Verzahnung auf

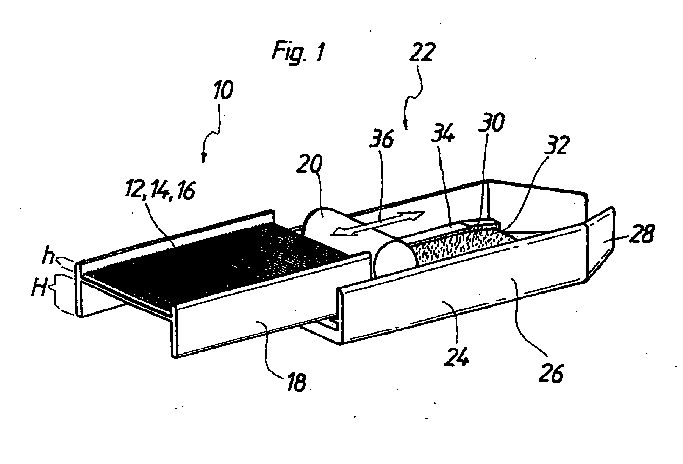

Die Erfindung wird nachfolgend anhand eines in der Zeichnung dargestellten Ausführungsbeispiels näher erläutert. Die einzige Figur zeigt ein erfindungsgemäßes Formgebungswerkzeug in perspektivischer Darstellung.

Das in der Zeichnung dargestellte, erfindungsgemäße Formgebungswerkzeug 10 ist ein einstückiges Kunststoffteil. Es weist eine in Draufsicht rechteckige Wälzplatte 12 auf, deren beide Seiten als Wälzflächen 14 ausgebildet sind und eine Rändelung in Form einer Verzahnung 16 aufweisen. Die Verzahnung 16 weist quer über die Wälzfläche 14 durchgehende Zähne auf. Die Verzahnung 16 und damit die Wälzfläche 14 ist, wie bereits gesagt, auf beiden Seiten der Wälzplatte 12 ausgebildet.

An ihren beiden Längsseiten ist die Wälzplatte 12 des erfindungsgemäßen Formgebungswerkzeugs 10 einstückig mit zwei in Längsrichtung durchgehenden Stegen 18, die Führungs- und Abstandshalteelemente bilden. Die Stege 18 stehen auf beiden Seiten von der Wälzplatte 12 und damit von den Wälzflächen 14 ab, so dass das Formgebungswerkzeug 10 einen H-förmigen Querschnitt aufweist. Eine Höhe H, h, um die die Stege 18 von den Wälzflächen 14 abstehen, ist auf beiden Seiten der Wälzplatte 12 unterschiedlich, wobei auf einer Seite der Wälzplatte 12 die beiden Stege 18 um dieselbe Höhe H, h abstehen.

Das erfindungsgemäße Formgebungswerkzeug 10 dient zum Rundformen von aus einem festen Schaum bestehenden, plastisch verformbaren Spielbausteinen 20, von denen einer in der Zeichnung dargestellt ist. Derartige Spielbausteine sind beispielsweise aus der DE 197 03 038 bekannt. Sie sind mit einem Extruder aus einem Stärkematerial, also aus Stärke oder stärkehaltigem Material aufgeschäumt. Die bekannten Spielbausteine 20 haben näherungsweise die Form eines Zylinders mit geringer Form-, Oberflächen- und Durchmessergenauigkeit. In der Zeichnung ist der Spielbaustein 20 idealisiert als Zylinder dargestellt.

Zum Rundformen des Spielbausteins 20 wird das erfindungsgemäße Formgebungswerkzeug 10 zusammen mit einer Reibe 22 verwendet, wie sie aus der DE 200 09 182 bekannt ist. Die Reibe 22 weist ein kastenförmiges Grundteil 24 aus Kunststoff auf. Das Grundteil 24 weist zwei Längsseitenwände 26 auf, es ist an einer Schmalseite offen, an der anderen Schmalseite ist eine trichterförmige Schüttöffnung 28 ausgebildet. Am Grund der Reibe 22 liegt eine sog. Kratze 30 ein, also ein Flachriemen, der kurze Drahtstifte 32 aufweist, die auf einer Seite aus dem Flachriemen vorstehen. Die Kratze 30 liegt in Nuten des Grundteils 24 der Reibe 22 ein, die durch von den Längsseitenwänden 26 nach Innen stehende Längsrippen 34 gebildet sind.

Zum Rundformen wird der aus dem festen Schaum bestehende Spielbaustein 20 quer auf die Kratze 30 der Reibe 22 aufgelegt und das Formgebungswerkzeug 10 wird aufgesetzt. Die Stege 18 des Formgebungswerkzeugs 10 greifen zwischen die Längsseitenwände 26 der Reibe 22 ein, sie bilden Führungselemente, die das Formgebungswerkzeug 10 in Längsrichtung verschiebbar an der Reibe 22 führen. Das Formgebungswerkzeug 10 wird in Längsrichtung (Doppelpfeil 36) mehrfach hin- und herverschoben, wobei der Spielbaustein 20 auf der Kratze 30 und einer der Wälzflächen 14 des Formgebungswerkzeugs 10 abrollt. Die Reibe 22 wirkt also nicht als Reibe, sondern wie das Formgebungswerkzeug 10 als Werkzeug zum Abrollen des Spielbausteins 20. Durch das Abrollen/Wälzen des Spielbausteins 20 auf der Kratze 30 und der Wälzfläche 14 wird der Spielbaustein 20 rund geformt, seine Form nähert sich einer Zylinderform an, seine Form- und Oberflächengenauigkeit wird verbessert.

Das Hin- und Herverschieben des Formgebungswerkzeugs 10 auf der Reibe 22 erfolgt mindestens so lange, bis die Stege 18 des Formgebungswerkzeugs 10 auf den Längsrippen 34 der Reibe 22 aufsitzen. Die Stege 18 bilden Abstandshalteelemente, die durch Aufsitzen auf den Stegen 34 der Reibe 22 den Abstand der Wälzfläche 14 des Formgebungswerkzeugs 10 von der Kratze 30 der Reibe 22 festlegen. Durch den vorgegebenen Abstand der Wälzfläche 14 von der Kratze 30 ist ein Durchmesser des Spielbausteins 20 reproduzierbar vorgegeben, so dass sich eine beliebige Anzahl an Spielbausteinen 20 mit näherungsweise gleichem Durchmesser herstellen lässt.

Ist die Höhe h um die die Stege 18, die die Abstandshaltelemente des Formgebungswerkzeugs 10 bilden, niedrig gewählt, reißt der Spielbaustein 20 beim Abrollen im Innern ein und es entsteht ein schlauchartiger Hohlkörper, der aus dem festen Schaum besteht. Dieser Hohlkörper lässt sich in Längsrichtung durchschneiden und bildet dann ein blatt- oder lappenförmiges Gebilde, das beispielsweise zum Gestalten von Oberflächen von Modellandschaften verwendet werden kann (nicht dargestellt). Beim Abrollen reißen oder franzen die Ränder des schlauchartigen Hohlkörpers aus, so dass sich die durch Aufschneiden in Längsrichtung hergestellten blatt- oder lappenförmigen Gebilde dicht und ohne erkennbare Ränder auf einer Oberfläche aneinanderfügen lassen. Die Stifte 32 der Kratze 30 verursachen beim Abrollen des Spielbausteins 20 eine natürlich aussehende Oberflächenstruktur, die zur Gestaltung von Modellandschaften gewünscht ist.

## Patentansprüche

1. Formgebungswerkzeug zum Rundformen eines aus einem festen Schaum bestehenden, plastisch verformbaren Spielbausteins, wobei das Formgebungswerkzeug eine raue Wälzfläche aufweist, **dadurch gekennzeichnet, dass** von der Wälzfläche (14) ein Führungs- und Abstandshalteelement (18) absteht.

2. Formgebungswerkzeug nach Anspruch 1, **dadurch gekennzeichnet, dass** das Führungs- und Abstandshalteelement (18) stegartig ausgebildet ist.

3. Formgebungswerkzeug nach Anspruch 1, **dadurch gekennzeichnet, dass** das Formgebungswerkzeug (10) zwei mit Abstand voneinander angeordnete Führungs- und Abstandshalteelemente (18) aufweist.

4. Formgebungswerkzeug nach Anspruch 1, **dadurch gekennzeichnet, dass** das Formgebungswerkzeug (10) eine Wälzplatte (12) mit rauen Wälzflächen (14) auf ihren beiden Seiten aufweist und dass von beiden Wälzflächen (14) Führungs- und Abstandshalteelemente (18) unterschiedlicher Höhe abstehen.

5. Formgebungswerkzeug nach Anspruch 1, **dadurch gekennzeichnet, dass** die Wälzfläche (14) eine Rändelung, insbesondere eine Verzahnung (16) aufweist.

## Claims

1. Shaping tool for giving a round shape to a plastically deformable toy building block made from a solid foam, the shaping tool having a rough rolling surface, **characterised in that** a guiding and spacer element (18) extends out from the rolling surface (14).

2. Shaping tool according to claim 1, **characterised in that** the guiding and spacer element (18) is of flange-like construction.

3. Shaping tool according to claim 1, **characterised in that** the shaping tool (10) has two guiding and spacer elements (18) arranged spaced apart from one another.

4. Shaping tool according to claim 1, **characterised in that** the shaping tool (10) comprises a rolling plate (12) having rough rolling surfaces (14) on both sides thereof; and **in that** guiding and spacer elements (18) of different height extend out from both rolling surfaces (14).

5. Shaping tool according to claim 1, **characterised in that** the rolling surface (14) has knurling, especially a toothed arrangement (16).

## Revendications

1. Outil de façonnage pour donner une forme ronde à un élément de jeu en mousse rigide à déformation plastique, l'outil de façonnage comportant une surface de laminage rugueuse, **caractérisé en ce qu'**un élément de guidage et d'écartement (18) dépasse de la surface de laminage (14).

2. Outil de façonnage selon la revendication 1, **caractérisé en ce que** l'élément de guidage et d'écartement (18) est réalisé en forme de bord.

3. Outil de façonnage selon la revendication 1, **caractérisé en ce que** l'outil de façonnage (10) comporte deux éléments de guidage et d'écartement (18) écartés l'un de l'autre.

4. Outil de façonnage selon la revendication 1, **caractérisé en ce que** l'outil de façonnage (10) comporte une plaque de laminage (12) avec des surfaces de laminage rugueuses (14) sur ses deux côtés et **en ce que** des éléments de guidage et d'écartement (18) dépassent des deux surfaces de laminage (14).

5. Outil de façonnage selon la revendication 1, **caractérisé en ce que** la surface de laminage (14) comporte un moletage, en particulier une denture (16).
